# FASCICULE DE BREVET EUROPEEN

(11) **EP 1 634 002 B1**
(45) Date de publication et mention de la délivrance du brevet: **14.02.2007**
(21) Numéro de dépôt: 04742878.4
(22) Date de dépôt: 03.06.2004
(51) Int. Cl.: F16K 1/30

(54) **CLAPET DE REMPLISSAGE ET DE VIDAGE ET OUTILLAGE DE NETTOYAGE D'UNE BOUTEILLE DE FLUIDE PRESSURISE**
FÜLL- UND LEERVENTIL UND REINIGUNGSGERÄT FÜR EINEN FLÜSSIGKEITSDRUCKBEHÄLTER
FILLER AND DRAIN VALVE AND CLEANING TOOLS FOR A PRESSURE-FLUID CYLINDER

(30) Priorité: 05.06.2003 FR 0350203
(43) Date de publication de la demande: 15.03.2006
(73) Titulaire: Legoit, Philipp, F-93140 Bondy (FR)
(72) Inventeur: Legoit, Philipp, F-93140 Bondy (FR)
(74) Mandataire: Poulin, Gérard
(86) Numéro de dépôt international: PCT/FR2004/050211
(87) Numéro de publication internationale: WO 2004/111508

(56) Documents cités:
- EP-A- 0 591 840
- GB-A- 1 332 877
- US-A- 3 930 517
- US-A- 4 181 143
- US-A- 4 611 628

## Description

### Domaine de l'invention

L'invention concerne le domaine du stockage des fluides sous pression dans des bouteilles et en particulier des gaz purs devant généralement être restitués à une pression moindre après une détente.

### Art antérieur et problème posé

Pour l'utilisation de gaz purs nécessitant un taux minimal d'impuretés, il est connu d'utiliser des dispositifs de filtration placés dans les clapets utilisés à l'entrée du récipient de stockage et en particulier une bouteille. En effet, dans certains domaines de l'industrie, par exemple dans celui de l'électronique, il est nécessaire de pouvoir disposer d'un gaz propre stocké dans des conditions fiables. A cet effet, le gaz est stocké de façon comprimée dans une bouteille de gaz équipée d'un robinet, complétée éventuellement d'un détendeur. Ce dernier permet d'abaisser la pression du gaz contenu dans la bouteille à un niveau de basse pression convenant à l'utilisation envisagée.

Or, le nombre d'impuretés entraînées par le courant de gaz sortant d'une telle bouteille de stockage peut être élevé et difficile à maîtriser. A cet effet, il est connu d'utiliser des robinets équipés de moyens de filtration destinés à filtrer le gaz avant qu'il ne soit délivré à basse pression.

Un tel clapet est décrit dans le document de brevet européen EP-0 591 840 et comprend deux canaux internes débouchant à l'intérieur du récipient, à savoir d'une bouteille. Un de ces canaux est utilisé pour remplir le récipient, tandis que l'autre est utilisé pour restituer le gaz avec un degré de pureté déterminé. Deux éléments filtrants sont utilisés à cet effet. Toutefois, la conception de ce clapet, à savoir son corps et les différents conduits et orifices, est relativement compliquée, nécessite de nombreuses phases de fabrication, rendant cette dernière très coûteuse et une manipulation complexe pour le remplissage.

Un autre clapet représentant l'état de la technique est décrit dans le brevet US 3,930,517.

Le but de l'invention est de proposer un clapet présentant un coût réduit, notamment grâce à une conception simplifiée, évitant des manipulations spécifiques pour le remplissage et permettant de conserver les robinets bouteille existants.

### Résumé de l'invention

A cet effet, un premier objet principal de l'invention est un clapet de remplissage et de vidage d'une bouteille de fluide pressurisé, destiné à être placé à l'intérieur de ladite bouteille et étant relié à un robinet de manoeuvre. Le clapet comprend principalement un corps à l'intérieur duquel se trouvent au moins :
- un corps possédant :
   - un premier orifice externe de remplissage et de vidage ;
   - au moins un premier orifice interne ;
- un premier piston monté coulissant de façon étanche à l'intérieur du corps de façon à boucher et déboucher le au moins un premier orifice interne ; et
- un deuxième piston, monté mobile à l'intérieur du premier piston.

Selon l'invention :
- le corps comprend au moins un deuxième orifice interne de vidage, et en ce que :

- le au moins un premier orifice interne est un orifice latéral de remplissage ; et
- le deuxième piston est monté mobile à l'intérieur du premier piston pour boucher et déboucher le deuxième orifice interne et possédant des passages latéraux.

Dans la réalisation préférentielle du clapet selon l'invention, on utilise un premier ressort prenant appui sur un épaulement interne du corps pour forcer le premier piston à boucher le premier orifice interne.

De façon équivalente, il très avantageux d'utiliser un deuxième ressort prenant appui sur un épaulement interne du premier piston pour forcer le deuxième piston à boucher le deuxième orifice interne.

Dans le but de délivrer des gaz à un degré de pureté assez élevé, on utilise un filtre dans le deuxième orifice interne.

De manière à assurer l'étanchéité du premier piston, au moins un premier joint d'étanchéité est utilisé autour du premier piston.

De même, au moins un deuxième joint d'étanchéité est utilisé autour du deuxième piston.

Dans une réalisation avantageuse du clapet selon l'invention, celui-ci comprend un bouchon fileté auquel est fixé le corps et dans lequel se trouve l'orifice externe de remplissage et de vidage.

Un deuxième objet principal de l'invention est constitué par un outillage de nettoyage d'une bouteille associé au clapet précédemment décrit. Cet outillage comprend un corps creux dans lequel coulisse une tige de manoeuvre actionnée par une manette de manoeuvre. Cet outillage est placé à l'entrée de la bouteille et l'extrémité de la tige de manoeuvre est placée de manière à pouvoir pousser les deux pistons, afin de permettre à des fluides de nettoyage de pénétrer dans la bouteille.

### Liste des figures

L'invention et ses différentes caractéristiques techniques seront comprises à la lecture de la description suivante, accompagnée de plusieurs figures représentant :
- figure 1, le clapet selon l'invention, coupé et placé dans une bouteille dans laquelle il doit être utilisé ;
- figure 2, en coupe, le clapet selon l'invention pendant la phase de remplissage ;
- figure 3, en coupe, le clapet selon l'invention pendant la phase de vidage ;
- figure 4, en coupe, dans une position dite fermée, un outillage de nettoyage d'une bouteille associé au clapet selon l'invention ; et
- figure 5, en coupe, dans une position dite ouverte, le même outillage que celui de la figure 4.

### Description détaillée d'une réalisation de l'invention

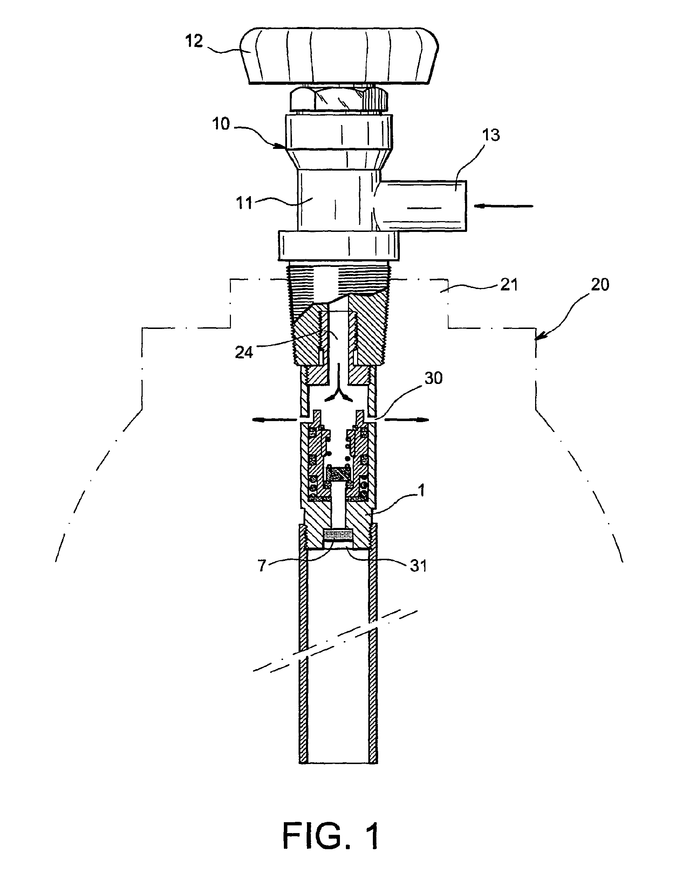

Sur la figure 1, le clapet, représenté en coupe, est placé dans une bouteille 20 destinée à contenir un fluide sous pression, tel qu'un gaz liquéfié. Elle est fermée par un robinet 10 dont le corps 11 est fixé dans le goulot 21 de la bouteille 20. Un bouton de manoeuvre 12 permet de libérer le gaz emprisonné dans la bouteille, par l'intermédiaire du clapet.

Comme l'indique les flèches, ce dernier a été représenté en phase de remplissage, c'est-à-dire que l'entrée 13 du robinet 10 peut être reliée à une source de gaz sous pression. Le gaz pénètre dans un orifice externe 24 et pousse un premier piston 3. Ce dernier libère alors des premiers orifices internes 30, qui sont des orifices latéraux placés dans son corps 1. Le gaz inoculé sous pression pénètre donc dans la bouteille 20.

La libération du gaz se fait au moyen du bouton de manoeuvre 12. Le clapet, par le jeu d'une différence de pression, ouvre alors un canal de vidage 9, placé de manière centrale au bout du corps 1 du clapet et muni d'un filtre 7. Les premiers orifices internes 30 sont alors obturés et le gaz est libéré par le robinet 10 après être passé dans le filtre 7 du clapet.

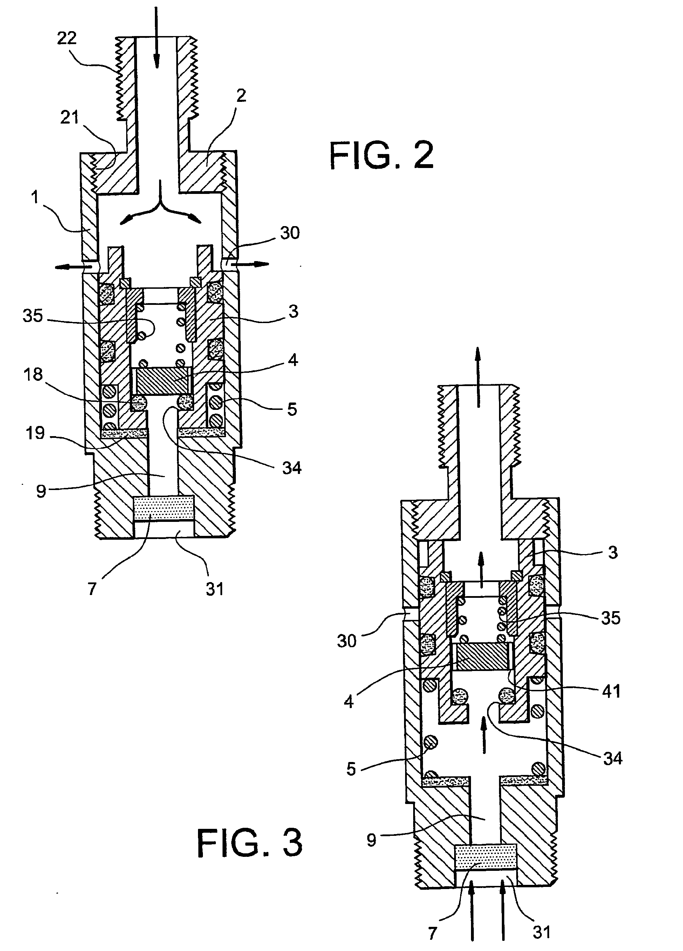

En référence à la figure 2, le clapet selon l'invention comprend principalement un corps 1 de forme générale tubulaire, fermé à son extrémité supérieure par un bouchon 2 qui est vissé au moyen d'un taraudage 21 du corps 1. Le bouchon 2 possède un filetage 22 sur une partie plus étroite, permettant au bouchon d'être vissé dans le goulot 21 de la bouteille.

Une partie importante du clapet est constituée par le premier piston 3 monté coulissant à l'intérieur du corps 1, de façon étanche, grâce à un premier joint torique ; dans ce cas, deux premiers joints d'étanchéité 8 toriques ont été utilisés. Ce premier piston 3 a pour fonction d'obturer et d'ouvrir les premiers orifices internes 30 qui sont latéraux, par une course de quelques millimètres. Dans l'état représenté sur cette figure 2, le clapet est en position de remplissage. Comme l'indique les flèches, le gaz sous pression passe dans le robinet, rentre à l'intérieur du corps 1 et en sort par les premiers orifices internes 30. Le premier piston 3 étant en position basse, il comprime un premier ressort 5 qui prend appui sur le fond 19 du corps 1.

Le corps 1 possède, à son extrémité inférieure, un canal de remplissage 9 placé dans la partie inférieure du corps 1 et débouchant dans un deuxième orifice interne 31 de vidage. Un filtre 7 complète ce canal de vidage 9, de manière à ce que le gaz contenu dans la bouteille soit purifié avant de sortir de celle-ci.

On distingue, à l'intérieur du premier piston 3, un deuxième piston 4 de petite taille, monté mobile à l'intérieur du premier piston 3 et susceptible de venir obturer le canal de vidage 9, comme le représente la position sur la figure 2. Un deuxième joint torique 18 peut également compléter ce montage en étant placé sur un épaulement 34 formé à l'intérieur de la base du deuxième piston 4. On note que le premier ressort 5 est taré pour fléchir à partir d'une pression de remplissage déterminée. Ainsi, il est impossible de remplir de gaz la bouteille, si cette pression n'est pas dépassée pour le remplissage. On peut donc stocker du gaz à assez haute pression dans la bouteille.

La figure 3 montre le clapet en position de vidage. Dans celle-ci, un opérateur a tourné le bouton de manoeuvre 12 pour ouvrir le robinet 10, mettant le haut du clapet à une pression basse d'utilisation, compte tenu que le premier piston 3 est systématiquement en position haute à l'aide du premier ressort 5. Le premier piston 3 obture alors les premiers orifices internes 30 latéraux. De plus, la pression régnant à l'intérieur de la bouteille soulève le deuxième piston 4 qui se décolle de l'épaulement 34 formé à l'intérieur du premier piston 3 sur lequel il était appuyé. L'intérieur du haut du clapet est alors en communication avec l'intérieur du bas du clapet et l'intérieur de la bouteille. En effet, le deuxième piston 4 possède des passages latéraux 41, prévus moins profonds que la demi épaisseur du deuxième joint d'étanchéité 18 torique. Le gaz contenu à l'intérieur de la bouteille peut alors s'échapper, comme le montre une flèche, c'est-à-dire pénétrer dans l'orifice de vidage 21, traverser le filtre 7 et le canal de vidage 9 pour remonter vers le haut du clapet.

On note qu'un deuxième ressort 35 permet de maintenir, dans le cas de la figure 2, le deuxième piston 4 plaqué contre le siège 34 du premier piston 3.

Le deuxième piston 4 peut prendre la forme d'une bille ou de tout autre forme de révolution, dès l'instant qu'il assure l'étanchéité sur le siège 34 du premier piston 3 et qu'il permet le passage latéral du gaz.

Il est ainsi possible de fournir un clapet ayant pour fonction de mettre en relation automatique une voie de passage pour un fluide dans une première direction, en l'occurrence vers l'intérieur de la bouteille, lors du remplissage de cette dernière. De même, il permet à celle-ci d'être vidée par une autre voix différente que de celle du remplissage.

Le clapet selon l'invention, se fixant directement à l'intérieur de la bouteille, de façon définitive ou non, peut servir à fixer n'importe quel organe présent placé sur l'orifice d'entrée ou de sortie de ladite bouteille. Ainsi, il est possible d'utiliser un détendeur. L'utilisation d'un détendeur de fluide placé à la sortie de la bouteille permet d'éliminer le risque lié à la pression du fluide sortant en dehors de la bouteille et d'obtenir une pression de sortie pré-réglée.

Il est également possible d'utiliser à la sortie de la bouteille n'importe quel autre dispositif d'éjection de fluide, de purification, de détente, de mesure de débit ou de mélange. On peut aussi utiliser des dispositifs permettant une transformation liée à la nature physique ou chimique de fluide contenu dans la bouteille ou du réservoir équivalent.

Le clapet selon l'invention peut être adapté, dans sa taille, et dans les matériaux qui le constituent à des utilisations sur différents fluides corrosifs, toxiques ou autres.

Enfin, il permet de monter une cartouche de purification de fluide à l'intérieur de la bouteille.

Les utilisations d'un tel clapet sont diverses. En effet, il peut être avantageusement utilisé dans tous les domaines de l'industrie où on veut éviter un risque de fuite vers l'extérieur du récipient. C'est le cas, entre autres, de certains gaz médicaux en médecine d'urgence, et dans le cas du stockage de fluides de lutte contre l'incendie, comme dans les extincteurs.

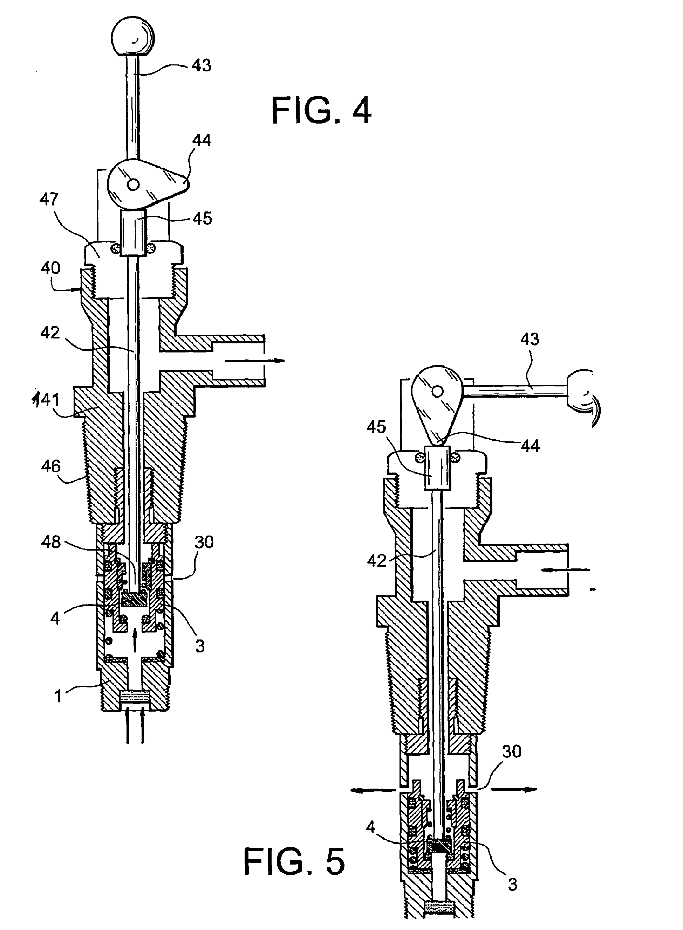

En référence aux figures 4 et 5, l'outillage de nettoyage 40, associé au clapet, se met en lieu et place de la tête de robinet, dans le goulot de la bouteille, référencée 21 sur la figure 1.

Il comprend principalement un corps creux 21 qui se fixe donc sur la bouteille par un filetage 46. Une tige de manoeuvre 42 est montée coulissante à l'intérieur de celui-ci. Une extrémité supérieure 45 de cette dernière est mise en contact une came 44 montée tournante par rapport à une tête d'outillage 47 fixée dans le corps 141. Une manette de manoeuvre 43 permet la rotation de la came 44 qui fait descendre la tige de manoeuvre 42. Celle-ci possède une extrémité inférieure 48 qui dépasse du corps 141 de manière à pouvoir être en contact avec le deuxième piston 4, afin de faire descendre le premier piston 3 par la rotation de la manette de manoeuvre 43. Ceci permet d'ouvrir les orifices latéraux 30 du clapet et de mettre en contact l'intérieur de la bouteille avec l'extérieur.

Lorsque la tige de manoeuvre 42 est remontée, le premier ressort, référencé 5 sur les figures 2 et 3, remonte l'ensemble des deux pistons 3 et 4 dans la position dite normale, c'est-à-dire la position de fermeture de la bouteille. Ceci a l'avantage de mettre l'intérieur du robinet systématiquement en présence d'un gaz qui aura traversé le filtre du clapet. Ainsi, le volume interne du robinet est maintenu sous atmosphère purifié.

Le nettoyage de cette dernière est ainsi possible en procédant par cycles de pression/dépression ou par soutirage en position de remplissage. Ainsi, des nettoyages de la bouteille peuvent avoir lieu sans que le filtre du clapet ne soit traversé.

Le filtre référencé 7 sur les figures 1, 2 et 3 doit comporter, de préférence, un disque de rupture étanche en partie opposé au robinet pour être isolé de toute pollution. Ce disque sera percé à la première mise en service du clapet par la différence de pression entre celle du gaz contenu dans la bouteille et celle lors de l'ouverture du robinet.

## Revendications

1. Clapet de remplissage d'une bouteille (20) de fluide pressurisé, destiné à être placé à l'intérieur de la bouteille et d'être relié à un robinet de manoeuvre (10), le clapet comprenant :
- un corps (1) possédant :
. un premier orifice externe (24) de remplissage et de vidage ;
. au moins un premier orifice interne (30) ;
- un premier piston (3) monté coulissant de façon étanche à l'intérieur du corps (1) de façon à boucher et déboucher le au moins un premier orifice interne (30) ; et
- un deuxième piston (4), monté mobile à l'intérieur du premier piston (3),
**caractérisé en ce que** :
- le corps (1) comprend au moins un deuxième orifice interne (31) de vidage, et **en ce que** :
- le au moins un premier orifice interne (30) est un orifice latéral de remplissage ; et
- le deuxième piston (4) est monté mobile à l'intérieur du premier piston (3) pour boucher et déboucher le deuxième orifice interne (31) et possédant des passages latéraux (41).

2. Clapet selon la revendication 1, **caractérisé en ce qu'**il comprend un premier ressort (5) prenant appui sur le fond (19) du corps (1) pour forcer le premier piston (3) à boucher le premier orifice interne (30).

3. Clapet selon la revendication 1, **caractérisé en ce qu'**il comprend un deuxième ressort (35) prenant appui sur un épaulement interne (34) du premier piston (3) pour forcer le deuxième piston (4) à boucher le deuxième orifice interne (31).

4. Clapet selon la revendication 1, **caractérisé en ce qu'**il comprend un filtre (7) placé dans le deuxième orifice interne (31).

5. Clapet selon la revendication 1, **caractérisé en ce qu'**il comprend au moins un joint d'étanchéité (8) torique placé autour du premier piston (3).

6. Clapet selon la revendication 1, **caractérisé en ce qu'**il comprend au moins un joint d'étanchéité (18) torique placé autour du deuxième piston (4).

7. Clapet selon la revendication 1, **caractérisé en ce que** le corps (1) est complété d'un bouchon (2) fileté et auquel est fixé le corps et dans lequel se trouve l'orifice externe (24).

8. Outillage de remplissage d'une bouteille, associé au clapet selon la revendication 1, **caractérisé en ce qu'**il comprend un corps (141) dans lequel coulisse une tige de manoeuvre (42) actionnée par une manette de manoeuvre (43) et dont l'extrémité inférieure (48) dépasse du corps (141), de façon à pouvoir repousser l'ensemble du premier piston (3) et du deuxième piston (4) du clapet selon la revendication 1 par l'actionnement de la manette de manoeuvre (43), lorsque l'outillage est placé à l'entrée de la bouteille.

## Claims

1. A valve for filling a bottle of pressurised fluid (20), intended to be placed inside the bottle and linked to a switching tap (10), the valve consisting of:
- a body (1) that possesses:
a primary external orifice (24) for filling and emptying;
at least one primary internal orifice (30);
- a primary piston (3) mounted so as to slide in leak-tight fashion inside the body (1) so as to seal and unseal the at least one primary internal orifice (30); and
- a secondary piston (4), mounted so as to be mobile within the primary piston (3),
**characterised in that**:
- the body (1) incorporates at least one secondary internal orifice (31) for emptying, and that:
- the at least one primary internal orifice (30) is a lateral filling orifice, and:
- the secondary piston (4) is mounted so as to be mobile within the primary piston (3) in order to seal and unseal the secondary internal orifice (31) and has lateral passages (41).

2. A valve in accordance with claim 1, **characterised in that** it incorporates a primary spring (5) supported by the base (19) of the body (1) so as to force the primary piston (3) to seal the primary internal orifice (30).

3. A valve in accordance with claim 1, **characterised in that** it incorporates a secondary spring (35) supported by an internal shoulder (34) of the primary piston (3) so as to force the secondary piston (4) to seal the secondary internal orifice (31).

4. A valve in accordance with claim 1, **characterised in that** it incorporates a filter (7) placed in the secondary internal orifice (31).

5. A valve in accordance with claim 1, **characterised in that** it incorporates at least one o-ring gasket (8) placed around the primary piston (3).

6. A valve in accordance with claim 1, **characterised in that** it incorporates at least one o-ring gasket (18) placed around the secondary piston (4).

7. A valve in accordance with claim 1, **characterised in that** the body (1) is completed by a threaded stopper (2) to which the body is fixed and in which the external orifice (24) is situated.

8. A mechanism for filling a bottle, combined with the valve in accordance with claim 1, **characterised in that** it incorporates a body (141) in which there is a sliding valve stem (42) activated by a control lever (43), the lower extremity (48) of which juts out from the body (141) in such a way that it is able to push the primary (3) and secondary (4) piston assembly of the valve in accordance with claim 1 upon activation of the control lever (43), when the mechanism is placed in the mouth of the bottle.

## Patentansprüche

1. Ventil zum Befüllen einer Flasche (20) für ein Druckmedium, das dazu bestimmt ist, in die Flasche eingesetzt und mit einem Absperrhahn (10) verbunden zu werden, wobei das Ventil enthält:
- einen Körper (1) mit
. einer ersten nach außen führenden Öffnung (24) zum Befüllen und Entleeren,
. zumindest einer ersten nach innen führenden Öffnung (30),
- einen ersten Kolben (3), der in dichter Weise gleitbeweglich innerhalb des Körpers (1) so gelagert ist, dass er die zumindest eine erste Innenöffnung (30) verschließt bzw. freigibt, und
- einen zweiten Kolben (4), der innerhalb des ersten Kolbens (3) beweglich gelagert ist,
**dadurch gekennzeichnet, dass**
- der Körper (1) zumindest eine zweite nach innen führende Öffnung (31) zum Entleeren aufweist und dass
- die zumindest eine erste Innenöffnung (30) eine seitliche Füllöffnung ist, und
- der zweite Kolben (4) innerhalb des ersten Kolbens (3) beweglich gelagert ist, um die zweite Innenöffnung (31) zu verschließen bzw. freizugeben, und seitliche Durchgänge (41) besitzt.

2. Ventil nach Anspruch 1, **dadurch gekennzeichnet, dass** es eine erste Feder (5) aufweist, die sich am Boden (19) des Körpers (1) abstützt, um den ersten Kolben (3) zu zwingen, die erste Innenöffnung (30) zu verschließen.

3. Ventil nach Anspruch 1, **dadurch gekennzeichnet, dass** es eine zweite Feder (35) aufweist, die sich an einer inneren Schulter (34) des ersten Kolbens (3) abstützt, um den zweiten Kolben (4) zu zwingen, die zweite Innenöffnung (31) zu verschließen.

4. Ventil nach Anspruch 1, **dadurch gekennzeichnet, dass** es einen Filter (7) aufweist, der in die zweite Innenöffnung (31) eingesetzt ist.

5. Ventil nach Anspruch 1, **dadurch gekennzeichnet, dass** es zumindest eine O-Ring-Dichtung (8) enthält, die um den ersten Kolben (3) herum positioniert ist.

6. Ventil nach Anspruch 1, **dadurch gekennzeichnet, dass** es zumindest eine O-Ring-Dichtung (18) enthält, die um den zweiten Kolben (4) herum positioniert ist.

7. Ventil nach Anspruch 1, **dadurch gekennzeichnet, dass** der Körper (1) mit einem Gewindestopfen (2) ergänzt ist, an den der Körper befestigt ist und in welchem sich die Außenöffnung (24) befindet.

8. Einrichtung zum Befüllen einer Flasche, die dem Ventil nach Anspruch 1 zugeordnet ist, **dadurch gekennzeichnet, dass** sie einen Körper (41) aufweist, in welchem eine Betätigungsstange (42) gleitet, die von einer Betätigungshandhabe (43) betätigt wird und deren unteres Ende (48) aus dem Körper (41) austritt, so dass sie die Einheit aus erstem Kolben (3) und zweitem Kolben (4) des Ventils nach Anspruch 1 durch die Betätigung der Betätigungshandhabe (43) verschieben kann, wenn die Einrichtung an den Einlass der Flasche positioniert ist.
